# EUROPEAN PATENT APPLICATION

(11) **EP 1 811 089 A2**
(43) Date of publication of application: **25.07.2007**
(21) Application number: 06022222.1
(22) Date of filing: 24.10.2006
(51) Int. Cl.: E02F 9/02, E02F 9/08, E02F 9/12

(54) **Working machine**

(30) Priority: 20.01.2006 GB 0601149
(71) Applicant: JCB Compact Products Limited, Rocester Staffordshire ST14 5JP (GB)
(72) Inventor: Brindle, Richard James, Yoxall, Burton on Trent DE 13 8PL (GB)
(74) Representative: Lucking, David John

(57) **Abstract**

A working machine (10) includes a main frame structure (11) and an upper frame structure (51), the upper frame structure (51) being slewable relative to the main frame structure (11) about a substantially upright axis (A), the main frame structure (11) including a main frame part (40) provided by a central portion (50) and four connecting arms (60 - 63) which extend outwardly of the central portion (50) towards track sub-frames (15, 16) at the sides of the machine (10), and wherein the central portion (50) of the main frame part (40) is provided as a casting, and the four connecting arms (60 - 63) are provided by the ends of fabricated elements (65, 66) which are attached to the central portion (50).

## Description

This invention relates to a working machine of the kind including a frame with a main ground engaging lower structure, and an upper frame structure, the upper frame structure being slewable relative to the lower frame structure about a generally upright axis.

Working machines of this kind are known from EP-A-1426497 which include a monolithic main frame part including a central portion which supports part of a slewing mechanism and four connecting arms which extend outwardly from the central portion to track sub-frames at either side of the working machine, and to which they are attached.

Thus the monolithic cast main frame part spaces the track sub-frames apart with such an arrangement, and the cast main frame part is dedicated to a single size of working machine so that if a machine requires an alternative spacing between track sub-frames, a complete alternative monolithic main frame casting would be required.

Other previous proposals which allow greater flexibility, e.g. as disclosed in US-A-4231699, require the main frame part to be fabricated and thus the main frame part is expensive to produce requiring the assembly of many different components.

According to a first aspect of the invention we provide a working machine according to claim 1.

In this way, the advantages of casting the central portion, which typically is of complex configuration, in order to provide support for a part of a slewing mechanism are maintained, and moreover a common cast central portion may be used in the production of a plurality of alternative main frame structures of different spacing between the track sub-frames, because the connecting arms are provided by fabricated elements which may readily be adapted to provide any suitable spacing in between the track sub-frames.

The fabricated elements preferably are simple and inexpensive box sections, but other configuration fabrications may be used. Desirably the fabricated elements extend substantially perpendicularly to a longitudinal axis of the working machine, between the track sub-frames.

The cast central portion is preferably cast in a weldable material, such as steel, and the fabricated elements preferably are welded to the central portion. The connecting arms may too be welded to the track sub-frames where these are made of a weldable material.

The cast central portion preferably includes a generally central opening to receive a depending part of the upper frame structure, the central axis of the opening defining the slewing axis about which the upper frame structure may be slewed.

Each track sub-frame may include inner and outer track sub-frame members arranged generally side by side with cross members between them spacing them apart, and desirably the inner and outer sub-frame members and the cross members are each provided as a monolithic casting, and preferably in a material such as steel, which may be welded.

The inner track sub-frame members may each include a plurality of integrally provided formations which extend inwardly towards the central portion of the main frame part and the fabricated elements of the main frame part may be welded to the inwardly extending formations to attach the central portion to the track sub-frames.

According to a second aspect of the invention we provide a method of manufacturing a working machine according to claim 9.

The invention will now be described with reference to the accompanying drawings in which:
FIGURE 1 is an illustrative side view of a working machine which may embody the invention;
FIGURE 2 is an illustrative perspective view of a track sub-frame of the main frame structure of the machine of Figure 1, but with the track removed for clarity;

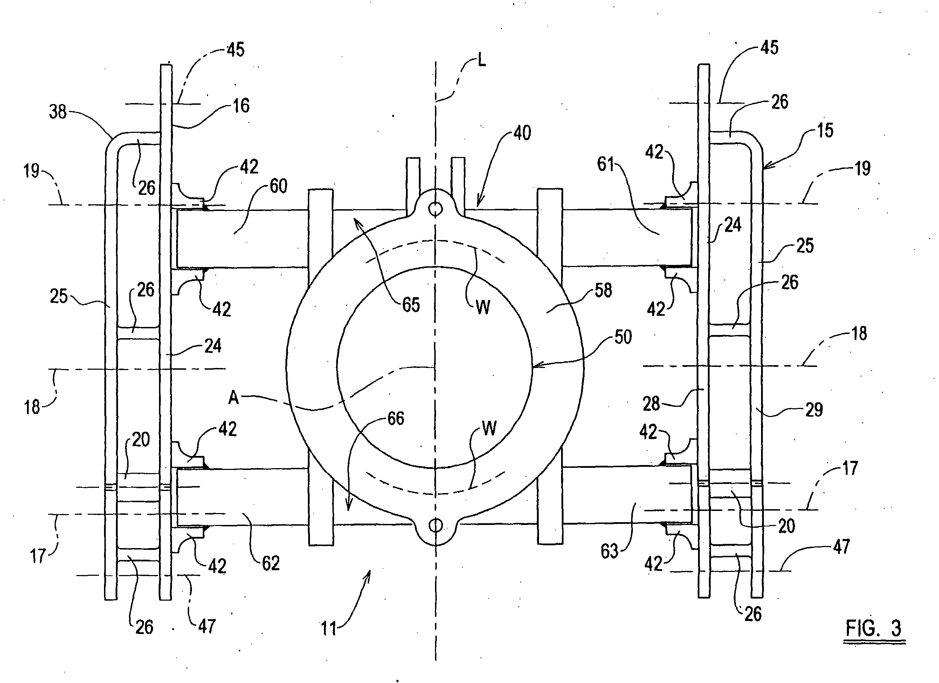

FIGURE 3 is an illustrative plan view of the main frame structure of the machine of Figure 1, again with drive tracks removed.

Referring to the drawings, a working machine 10 includes a main frame structure 11 which includes a pair of tracks 12, one at each side of the machine 10. Each track 12 is entrained about track support devices which are mounted by respective track sub-frames 15, 16.

The track support devices in this example, include three lower rollers 17, 18, 19, the track 12 passing between the lower rollers 17, 18, 19 and the ground, and at least one upper roller 20. The track sub-frames 15, 16 each also include a mounting 47 for a track tensioning device which includes a track tensioning element 49 which is resiliently biased so as to maintain a tension in the track 12.

Each sub-frame 15, 16 has inner 24 and outer 25 members arranged substantially side by side, and cross members 26 between them, the cross members 26 interconnecting and maintaining a spacing between the track sub-frame members 24, 25.

The track sub-frame members 24, 25 and the cross members 26 are each provided for each track sub-frame 15, 16 as a monolithic casting. Integrally cast in lower edges 27 of each respective track sub-frame member 24, 25 are a plurality of recesses 30-34. The recesses 30, 31, 32 each mount a spindle of a respective lower track support device roller 17, 18, 19 whilst recesses 33, 34 are each provided to lighten the casting.

Integrally cast in upper edges 28, 29 of each of track sub-frame member 24, 25 is a mount 35 for the upper track support device, roller 20, and further recesses 36, 37 to lighten the casting.

The pair of track sub-frames 15, 16 are arranged side by side with a main frame part 40 of the main frame structure 11 between them. The inner track sub-frame members 24 of each of the pair of track sub-frames 15, 16, each are provided with integrally cast inwardly extending formations 42, arranged in pairs.

These inwardly projecting formations 42 are provided for attaching the cast track sub-frames 15, 16 to the main frame part 40 as hereinafter described.

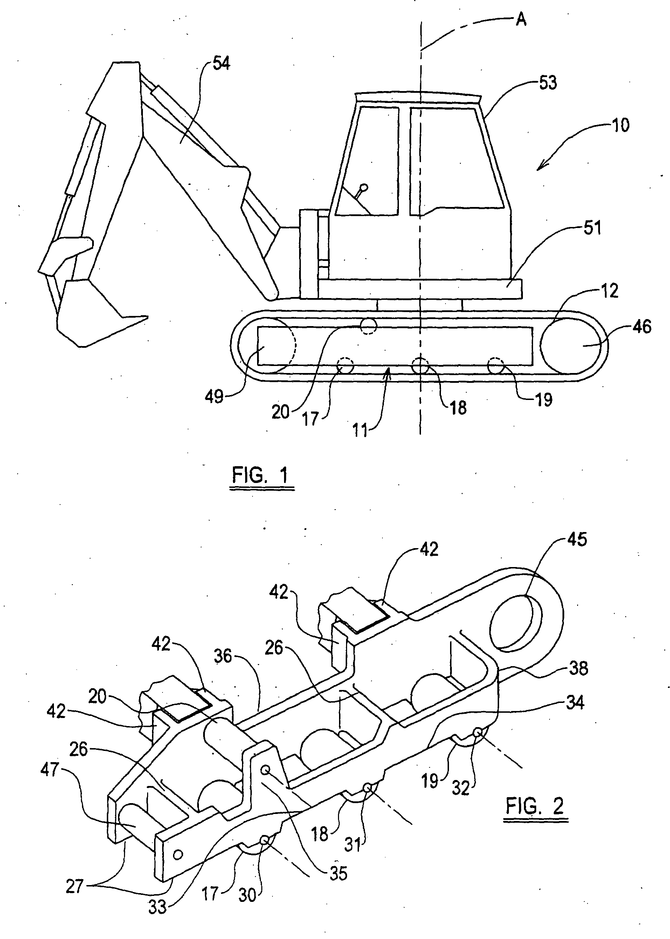

In Figure 2, it can be seen that the inner track sub-frame member 24 of each of the pair of track sub-frames 15, 16 extends longitudinally rearwardly of the machine 10, beyond an edge 38 of the outer track sub-frame member 25, and the extended track sub-frame member 24 part, is provided with an opening 45. This opening 45 is for mounting a track motor (not shown) which drives a track drive sprocket 46 (see Figure 1) to impart drive to the track 12 and hence to the machine 10 over the ground. The track motors conventionally are driven by hydraulic fluid provided by a pump of the machine 10.

At least one of the track sub-frame members 24, 25, both in this example, provide between them the mounting 47 for the track tensioning mechanism which includes the resiliently biased track tensioning element (roller) 49 which is biased in a direction to maintain a desired tension in the track 12.

The main frame part 40 further includes a central portion 50 which supports a slewing mechanism, for slewing an upper frame structure 51 relative to the main frame structure 11. The upper frame structure 51 includes a cab 53 for a machine operator, carries a working arm 54, houses an engine and cooling pack (not seen) and mounts the hydraulic pump. The upper frame structure 51 may be slewed by the slewing mechanism relative to the main frame structure 11 about a generally upright axis A.

In this example, the central portion 50 of the main frame part 40 supports a slew ring around a generally circular opening 58 which receives a depending part of the upper frame structure 51 to guide the upper frame structure 51 during slewing.

The main frame part 40 further includes four connecting arms 60-63 for attaching the central portion 50 to the track sub-frames 15, 16.

A first pair of the connecting arms 60, 61 are provided by either end of a fabricated box section element 65, whilst a second pair of the connecting arms 62, 63 are provided by either end of another fabricated box section element 66.

The connecting arms 60-63 are each attached to respective track sub-frames 15, 16 by welding to the integral cast inwardly extending projecting formations 42. Although in this example, each connecting arm 60-63 is welded between a pair of such formations 42, in another example the arms 60-63 may each be welded to a single inwardly extending formation 42, or to more than one or two formations one or more of which may extend within the fabricated box section element 65, 66.

The box section elements 65, 66 are each welded to the central portion 50 as indicated at W, and extend substantially perpendicularly relative to a longitudinal axis L of the working machine 10.

It will be appreciated that particularly where the monolithic castings of the track sub-frames 15, 16 are provided in a readily weldable cast material, such as cast steel, welding of the fabricated box section elements 65, 66 to the track sub frame castings is facilitated. However the track sub frames 15, 16 may be cast in any weldable material, such as cast iron although special equipment and techniques may be required to weld the castings 15, 16 to the elements 65, 66. Moreover the central portion 50 of the main frame structure 40 preferably is cast in steel to facilitate welding the fabricated box section elements 65, 66 to the central portion 50, but may again be provided in another preferably weldable material.

During manufacture it will be appreciated that by attaching the castings of the track sub-frames 15, 16 to the main frame part 40 as described, a very strong main frame structure 11 may be provided.

By virtue of the present invention, a common cast central portion 50 may be provided to make working machines of a variety of spacings between the track sub-frames 15, 16, simply by making the box section fabricated elements 65, 66 of an appropriate length or other configuration. Box sections are relatively easily and economically produced, and/or are readily available stock items, and so the advantages of casting a central portion 50 of a complex configuration may be maintained without any significant cost penalty.

If desired the box section or otherwise fabricated elements 65, 66 could be attached to the central portion 50 by other than welding, for example by fasteners such as bolts.

Many modifications may be made without departing from the scope of the invention.

For example, the cast central portion 50 need not be of the exact configuration shown and described, and the box section fabrications 65, 66 may be of different dimensions. Other configurations of fabrications to provide the connecting arms 60 to 63 are possible.

The description of the cast track frames 15, 16 is exemplary, as the track frames 15, 16 may in another example be fabricated at least in part.

In figure 1, the machine shown to which it has been described the present invention may be applied, is conventionally known as a "mini" or "micro" excavator, because the working machine 10 is small and the working arm 54 thereof is configured to perform excavating operations. The invention may be embodied in a larger working machine which have a slewing mechanism for slewing an upper frame structure 51 relative to the main frame structure 11.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A working machine (10) including a main frame structure (11) and an upper frame structure (51), the upper frame structure (51) being slewable relative to the main frame structure (11) about a substantially upright axis (A), the main frame structure (51) including a main frame part (40) provided by a central portion (50) and four connecting arms (60-63) which extend outwardly of the central portion (50) towards track sub-frames (15, 16) at the sides of the machine (10), and **characterised in that** the central portion (50) of the main frame part (40) is provided as a casting, and the four connecting arms (60-63) are provided by the ends of fabricated elements which are attached to the central portion (50).

2. A machine according to claim 1 **characterised in that** the fabricated elements (60-63) are box sections.

3. A machine according to claim 2 **characterised in that** the fabricated elements (60-63) extend substantially perpendicularly to a longitudinal axis (L) of the working machine (10), between the track sub-frames (15, 16).

4. A machine according to any one of claims 1 to 3 **characterised in that** the cast central portion (50) is cast in a weldable material and the fabricated elements (60-63) are welded to the central portion (50).

5. A machine according to any one of the preceding claims **characterised in that** the track sub-frames (15, 16) are made of a weldable material and the connecting arms (60-63) are welded to the track sub-frames (15, 16).

6. A machine according to any one of the preceding claims **characterised in that** the cast central portion (50) includes a generally central opening to receive a depending part of the upper frame structure (51), the central axis (A) of the opening defining the slewing axis about which the upper frame structure (51) may be slewed.

7. A machine according to any one of the preceding claims **characterised in that** each track sub-frame (15, 16) includes inner and outer track sub-frame members (24, 25) arranged generally side by side with cross members (26) between them spacing them apart, the inner and outer sub-frame members (24, 25) and the cross members (60-63) are each provided as a monolithic casting, in a material, which is weldable.

8. A machine according to claim 7 **characterised in that** the inner track sub-frame members (24) each include a plurality of integrally provided formations (42) which extend inwardly towards the central portion (50) of the main frame part (40) and the fabricated elements (60-63) of the main frame part (40) are welded to the inwardly extending formations (42) to attach the central portion (50) to the track sub-frames (15, 16).

9. A method of manufacturing a working machine (10) of the kind including a main frame structure (11) and an upper frame structure (51), and in which the upper frame structure (51) is slewable relative to the main frame structure (11) about a substantially upright axis (A), the method including providing the main frame structure (11) by casting a central portion (50) of a main frame part (40), attaching to the central portion (50) a pair of fabricated elements (60-63) the ends of which provide connecting arms, to provide the main frame part (40), and connecting the connecting arms (60-63) to track sub-frames (15, 16) of the main frame structure (11) at each side of the machine (10).
